# EUROPEAN PATENT SPECIFICATION

(11) **EP 4 457 424 B1**
(45) Date of publication and mention of the grant of the patent: **14.10.2026**
(21) Application number: 22912815.2
(22) Date of filing: 17.11.2022
(51) Int. Cl.: E21B 34/06, F16K 3/24, F16K 3/26, F16K 3/32, F24T 10/00, E21B 34/14, F16K 47/08, F24T 10/20

(54) **VALVE ASSEMBLIES FOR HIGH-TEMPERATURE WELLS**
VENTILANORDNUNGEN FÜR HOCHTEMPERATURBOHRLÖCHER
ENSEMBLES VANNES POUR PUITS À TEMPÉRATURE ÉLEVÉE

(30) Priority: 30.12.2021 US 202163266244 P; 20.05.2022 WO PCT/CA2022/050809
(43) Date of publication of application: 06.11.2024
(60) Divisional application: 26203125.5
(73) Proprietor: NCS Multistage Inc., Calgary, Alberta T2C 4X5 (CA); NCS Multistage, LLC, Houston, Texas 77070 (US)
(72) Inventor: WERRIES, Michael, Calgary, Alberta T2C 4X5 (CA); POWELL, Jesse Parker, Houston, Texas 77070 (US); KING, James Gambrell, Houston, Texas 77339 (US)
(74) Representative: Gregorj S.r.l.
(86) International application number: PCT/CA2022/051701
(87) International publication number: WO 2023/122826

(56) References cited:
- EP-A1- 2 963 232
- EP-A1- 2 963 232
- CN-A- 102 383 760
- US-A- 5 782 303
- US-A1- 2013 206 245
- US-A1- 2013 206 245
- US-A1- 2013 319 664
- US-A1- 2013 319 664
- US-B1- 8 267 178
- US-B1- 8 267 178

## Description

### TECHNICAL FIELD

The disclosure relates generally to well completion operations, and more specifically to valve assemblies for downhole tools suitable for use in high-temperature wells, such as geothermal wells.

### BACKGROUND

There are various types of downhole wells where high temperatures are encountered, including geothermal wells designed to capture geothermal energy. Geothermal energy is the thermal energy generated and stored in the Earth. A fluid is typically injected into the ground where it is heated. When the fluid is brought back to surface, the heat can be harvested. This may involve using the heat directly (e.g. to heat homes) and/or to generate electricity (e.g. using a turbine).

In a traditional geothermal system, hot water or steam is produced from a reservoir. In some systems, produced fluid directly drives a steam turbine in generation of electricity. In binary systems, heat is transferred at surface to a secondary working fluid that is used to drive a turbine to generate electricity.

More recently, Enhanced Geothermal Systems (EGS), also referred to as engineered geothermal systems, have been used to extract heat from hot reservoirs where there may be low natural permeability or fluid saturation. This concept offers great potential for dramatically expanding the use of geothermal energy into geographic areas that don't necessarily have hydrothermal reservoirs suitable for traditional geothermal systems.

Creating an EGS involves improving the natural permeability of rock in a reservoir by creating a subsurface fracture system. This is done by injecting fluid into a well and into the reservoir under carefully controlled conditions, which causes pre-existing fractures to re-open (and in some cases also creates new fractures within the reservoir), improving reservoir permeability. With increased reservoir permeability, a working fluid can be injected through the fractured rock, and transported through the reservoir to a production well where the heated working fluid is produced to surface.

Still further, closed loop geothermal systems have been described, otherwise known as Advanced Geothermal Systems (AGS). This typically involves the circulation of a working fluid in a closed loop through a hot reservoir to raise the temperature of the working fluid. At surface, thermal energy is transferred from the heated working fluid and converted to electricity.

The operational system may depend on the temperature of the formation, and whether or not the formation already carries a significant quantity of water.

Geothermal systems may therefore be open loop or closed loop. A closed loop geothermal system continuously circulates a heat transfer fluid through a sealed downhole conduit. The loop is filled just once and requires only a moderate amount of solution. The fluid never comes in direct contact with the formation, but the heat is transferred through the sealed conduit. In contrast, in an open loop geothermal system, the fluid is directed through the formation to collect heat directly from the rocks.

Since both geothermal and hydrocarbon energy production involve drilling wells into underground reservoirs, there are some similarities in the drilling, completion, and production operations and tools between both industries. However, there are also many significant differences, one being the much higher temperatures generally encountered in geothermal wells compared to oil and gas wells. In oil and gas wells, typical temperatures are 150 °C or less, with a "hot" well having a temperature of about 150-175 °C. In comparison, much higher temperatures of about 200 °C to 600 °C are encountered in geothermal wells.

Because of the temperature differences between hydrocarbon wells and geothermal wells, tools designed for hydrocarbon wells are often not suitable for use in geothermal wells, as the tools cannot function as needed under the higher temperatures. One such tool is a valve assembly, which is used in hydrocarbon wells for regulating fluid flow between the well and the surrounding formation during completion and production operations. Valve assemblies designed for oil and gas operations are generally not capable of functioning in higher temperature geothermal wells.

Valve assemblies for use in hydrocarbon wells may be of the sliding sleeve type, wherein upon moving a sleeve within the assembly, one or more ports are opened or closed. The sliding sleeve can be actuated by a ball, dart or other isolating member, or alternatively, a shifting tool can be used to slide the sleeve.

Downhole valve assemblies for hydrocarbon wells rely on elastomeric materials for sealing and are designed to be used in wellbore operations with much lower temperatures than geothermal wells. Because of this, valve assemblies designed for hydrocarbon wells are not suitable for use in high temperature geothermal wells.

There is a need for valve assemblies that can be used for operations in geothermal wells where high temperatures are encountered.

Prior art document US2013/319664A1 provides a good example of a known valve assembly.

### SUMMARY

In accordance with the disclosure, there are provided embodiments for valve assemblies that are suitable for use in well operations where high temperatures are encountered, such as temperatures of 200 °C or higher, preferably 300 °C or higher, and preferably 300 °C to 600 °C. High temperature wells include geothermal wells. The valve assemblies may have ports that can be opened to allow fluid flow between a fluid passageway in the valve assembly and the outside of the valve assembly (i.e., where a formation is located). The valve assemblies may use sealing assemblies comprising one or more materials that can function at high temperatures and don't require any polymeric materials, including elastomeric materials. The sealing assemblies may facilitate shifting the valve assembly between a first position, wherein fluid flow is blocked through the ports, and a second position, wherein there is a substantially open flow path through the ports.

The valve assemblies may comprise ports arranged to be opened sequentially instead of all at once. This arrangement of the ports that allows for sequential opening facilitates opening the valve assembly using a relatively low force given the flow area that is available through the ports.

The valve assembly may use a coupling member to couple a second sleeve to a first sleeve in the closed position, such that the second sleeve restricts flow between the fluid passageway and the ports until after all the ports have been opened. By restricting flow to the open port with the second sleeve, a lower pressure can be used to open the next port in the sequence. Once all the ports are open, the coupling member releases the second sleeve to allow relatively free fluid flow between the fluid passageway and the ports. This restriction of flow by the second sleeve may be accomplished using the sealing assemblies.

In some embodiments, after the valve assembly has been opened, the second sleeve can be closed to again restrict fluid flow through the ports. Restricting fluid flow may be done using the sealing assemblies. In some embodiments, fluid flow may be restricted using a flow restriction member.

In some embodiments, there is provided a valve assembly for downhole use in a high temperature well comprising:
a tubular housing having:
   a housing wall having an inner surface and an outer surface;
   a fluid passageway defined within the tubular housing; and
   at least one port in the housing wall for allowing fluid communication between the fluid passageway and outside the tubular housing;
a first sleeve disposed in the tubular housing and longitudinally slidable with respect to the tubular housing; and
at least one sealing assembly for restricting fluid flow between the fluid passageway and the at least one port, comprising:
   at least one ring-shaped member in a radial groove that create a tortuous flow path through the at least one ring-shaped member from a first side of the radial groove to a second side of the radial groove to restrict fluid flow through the at least one sealing assembly.

In some embodiments, there is provided a valve assembly for downhole use in a high temperature well comprising:
a tubular housing having:
   a housing wall having an inner surface and an outer surface;
   a fluid passageway defined within the tubular housing; and
   at least one port in the housing wall for allowing fluid communication between the fluid passageway and outside the tubular housing;
a first sleeve disposed in the tubular housing and longitudinally slidable with respect to the tubular housing from a first position to a second position;
a second sleeve disposed in the first sleeve and longitudinally slidable with respect to the first sleeve between an open and a closed position; and
a coupling member comprising an annular member having an inner surface that engages with an outer surface of the first sleeve and the second sleeve to couple the first and second sleeves together in the first position, and releases the second sleeve from the first sleeve in the second position.

In some embodiments, there is provided a valve assembly for downhole use in a high temperature well comprising:
a tubular housing having:
   a housing wall having an inner surface and an outer surface;
   a fluid passageway defined within the tubular housing;
   a plurality of ports in the housing wall for fluid communication between the fluid passageway and outside of the tubular housing; and
   a plurality of plugs, with one plug in each port, the plug being shearable to change the port from a closed position, in which the plug seals the port from fluid flow, to an open position, in which the plug is at least partially removed to allow fluid flow through the port; and
a first sleeve disposed in the tubular housing and longitudinally slidable with respect to the tubular housing from a first position, where the first sleeve is engaged with the tubular housing by the plugs, to a second position where the plugs have sheared and released the first sleeve from the tubular housing;
wherein the ports and plugs are arranged to be sheared sequentially as the first sleeve moves from the first position to the second position.

The valve assembly can withstand temperatures of at least 200 °C, preferably at least 300 °C, preferably at least 400 °C, more preferably at least 500 °C, and more preferably at least 600 °C. The high temperature well may be a geothermal well.

The at least one sealing assembly may consist of non-polymeric material. The at least one ring-shaped member may comprise a plurality of rings. The at least one ring-shaped member may comprise a coiled member having a plurality of rings. The rings of the at least one sealing assembly may be arranged side by side in the radial groove, and each ring may have a body with a first side face and a second side face. At least one of the rings may have a gap in its body to allow fluid flow through the body between the first and second side faces. The gap may comprise a slit through the body of the ring at an angle with respect to the radial axis of the ring. Multiple rings may comprise gaps through their bodies, and the gaps of adjacent rings may not be aligned. There may be an inter-ring gap between adjacent rings for allowing fluid flow between adjacent rings. The inter-ring gap is between the ring bodies. The radial groove may be defined by a first side wall, a second side wall, a top surface and a bottom surface. The first side wall and the second side wall may be at obtuse angles with respect to the bottom surface. The obtuse angle may be from about 120 degrees to about 150 degrees. The at least one ring-shaped member may have side faces, and the side faces adjacent the first and second side walls may be substantially parallel to the side walls. The at least one ring-shaped member may be metal.

Increasing longitudinal fluid pressure on the at least one sealing assembly may increase flow resistance in the at least one sealing assembly. Increasing longitudinal fluid pressure on the at least one sealing assembly may compress the rings against one of the first and second side walls to increase flow resistance in the at least one sealing assembly.

There may be at least two sealing assemblies, one being uphole of the at least one port and one being downhole of the least one port.

The valve assembly may further comprise a plug disposed in the at least one port and changeable from a closed position, in which the plug maintains a fluid seal in the at least one port, to an open position, in which fluid can flow through the at least one port. The plug may be shearable to change it from the closed position to the open position. Shearing the plug may allow the first sleeve to move in the tubular housing. During movement of the first sleeve in the tubular housing, the at least one sealing assembly may move past the sheared plug. The plug may be a closed-end hollow frangible plug. The plug may consist of non-polymeric materials.

The valve assembly may further comprise a second sleeve disposed in the first sleeve and longitudinally slidable with respect to the first sleeve between an open position, wherein the second sleeve does not substantially restrict fluid flow through the at least one port, and a closed position, wherein the second sleeve restricts fluid flow through the at least one port.

The first sleeve may further comprise at least one opening in its wall, and the first sleeve may be longitudinally slidable with respect to the tubular housing between a first position, wherein fluid flow between the at least one opening and the at least one port is restricted, and a second position, wherein there is a substantially open flow path between the at least one opening and the at least one port.

The valve assembly may further comprise a coupling member that allows for coupling and decoupling of the second sleeve and the first sleeve. The coupling member may be an annular member having an inner surface that engages with an outer surface of the first sleeve and the second sleeve to couple the first and second sleeves together in the first position, and releases the second sleeve from the first sleeve in the second position. The inner surface of the annular member may comprise radial grooves that engage with corresponding radial grooves in the outer surface of the first sleeve and/or the second sleeve to couple the first and second sleeves together. The inner surface of the annular member may have a first area with first radial grooves that engage with corresponding radial grooves on the first sleeve; and a second area with second radial grooves that engage with corresponding radial grooves on the second sleeve. The coupling member may expand into a coupling recess in the tubular housing when the first and second sleeve move from the first position to the second position to release the second sleeve from the first sleeve.

The first sleeve may have at least one opening in its wall, and in the first position, fluid flow between the at least one opening and the at least one port may be restricted, and in the second position, there may be a substantially open flow path between the at least one opening and the at least one port. In the open position, the second sleeve may not substantially restrict fluid flow through the at least one port, and in the closed position, the second sleeve may restrict fluid flow through the at least one port.

The valve assembly may further comprise a plug disposed in the at least one port and changeable from a closed position, in which the plug maintains a fluid seal in the at least one port, to an open position, in which fluid can flow through the at least one port.

Each plug may be engaged in a slot in the first sleeve wall prior to shearing. The slots may have various lengths along the longitudinal plane of the valve assembly, and the plugs may be configured to shear in sequence based on the length of the slot they are engaged with, from the shortest slot to the longest slot. Each slot has a downhole edge and an uphole edge, and at least one of the downhole or uphole edges of the slots may be aligned in a transverse plane. Alternatively, or in addition, at least one of the downhole or uphole edges of the slots may be positioned in a different transverse plane than a corresponding downhole or uphole edge of the other slots, which determines the sequence in which the plugs shear. This means that at least one of the downhole edges of the slots is positioned in a different transverse plane than the downhole edges of the other slots and/or at least one of the uphole edges of the slots is positioned in a different transverse plane than the uphole edges of the other slots

The ports and plugs may be located in more than one transverse plane in the tubular housing, with the plugs arranged to be sheared in sequence along the transverse planes. There may be multiple ports and plugs in at least one of the transverse planes, and the plugs in the same transverse plane may be shearable substantially simultaneously.

The plugs may be shearable using a shifting tool. The plugs may be shearable using an isolation member to increase fluid pressure in the fluid passageway.

At least some of the ports and plugs may not be aligned on the same longitudinal plane.

The valve assembly may further comprise a second sleeve disposed in the first sleeve and longitudinally slidable with respect to the first sleeve between an open position, wherein the second sleeve does not restrict fluid flow through the ports, and a closed position, wherein the second sleeve restricts fluid flow through the ports.

The valve assembly may further comprise a flow restriction member in the fluid passageway to restrict flow through the ports when the first sleeve is in the second position. The flow restriction member may increase the length and tortuosity of the fluid flow path to restrict flow. The flow restriction member may comprise a sleeve having a plurality of slits in its wall through which the flow path goes. The flow restriction member may comprise a sleeve having a tortuous groove in its outer wall through which the flow path goes.

### BRIEF DESCRIPTION OF THE DRAWINGS

Various objects, features and advantages of the disclosure will be apparent from the following description of particular embodiments, as illustrated in the accompanying drawings. Similar reference numerals indicate similar components.

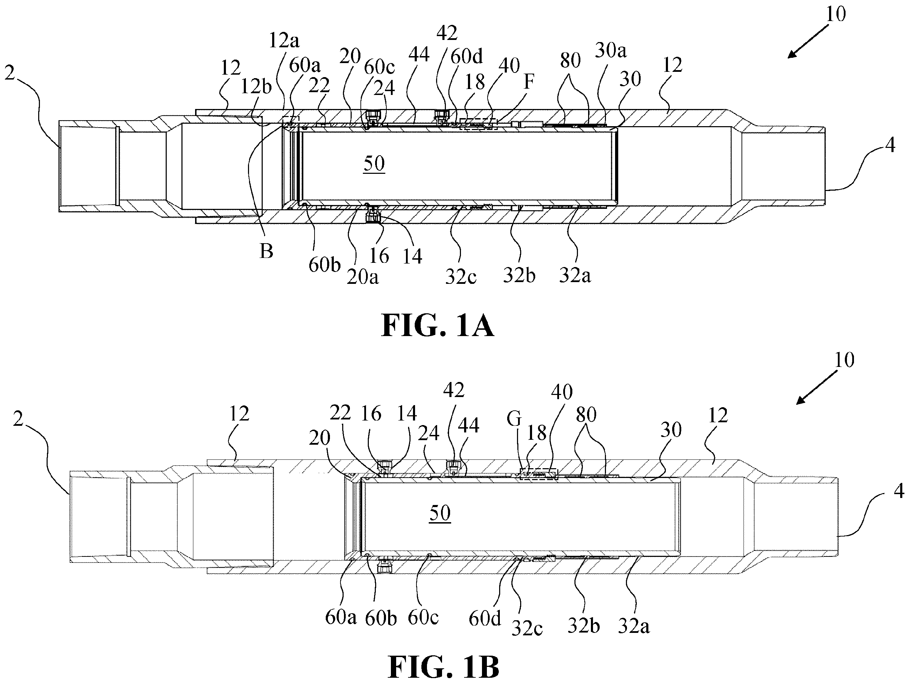

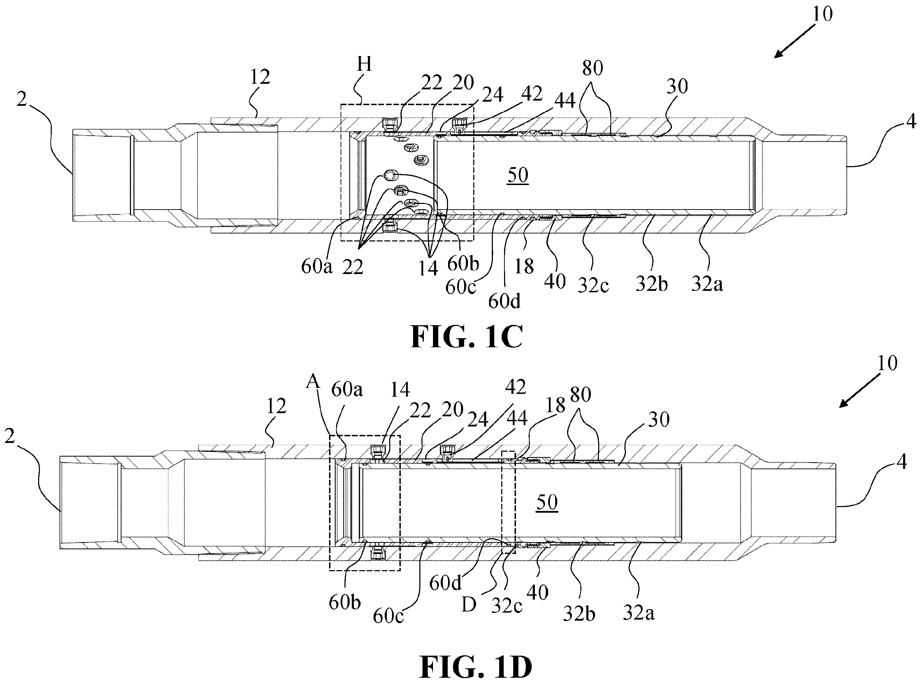

**FIGS. 1A, 1B****,** **1C, 1D** are cross-sectional side views of a valve assembly in accordance with one embodiment, showing the sequential movement of an outer sleeve and an inner sleeve of the valve assembly.
   **FIG. 1A** shows the outer sleeve and inner sleeve in the first position, where the ports are closed.
   **FIG. 1B** shows the outer sleeve and inner sleeve in the second position.
   **FIG. 1C** shows the inner sleeve in the open position.
   **FIG. 1D** shows the inner sleeve in the closed position.
**FIG. 2** is an enlarged view of area **A** in **FIG. 1D** showing the restricted flow pathway through a sealing assembly when the inner sleeve is in the closed position.
**FIG. 3A** is an enlarged view of area **F** in **FIG. 1A** showing the outer sleeve and inner sleeve coupled together with the coupling member in the first position.
**FIG. 3B** is an enlarged view of area **G** in **FIG. 1B** showing the outer sleeve and inner sleeve uncoupled in the second position.
**FIG. 4A** **is** a perspective view of a sealing assembly.
**FIG. 4B** **is** an enlarged view of area **B** in **FIG. 1A** showing the sealing assembly.
**FIG. 4C** **is** a side view of the sealing assembly of **FIG. 4A****.**
**FIG. 4D** is a side view of one of the rings of the sealing assembly of **FIG. 4A****.**
**FIG. 4E** is an end view of the sealing assembly of **FIG. 4A****.**
**FIGS. 5A, 5B, 5C, 5D, 5E** are schematic side views of the outer sleeve of the valve assembly showing the sequential shearing of plugs as the outer sleeve moves from a first position **(****FIG. 5A****) to** a second position **(****FIG. 5E****)** to open ports in the tubular housing.
**FIG. 6A** is an enlarged view of area **H** in **FIG. 1C** showing openings in the outer sleeve aligned with open ports in the tubular housing when the inner sleeve is in the open position.
**FIG. 7A** is an enlarged view of area **J** in **FIG. 8**Dshowing the flow restriction member of the valve assembly when the inner sleeve is in the closed position.
**FIG. 7B** is a perspective view of a flow restriction member from one side.
**FIG. 7C** is a perspective side view of the flow restriction member of **FIG. 7B** from another side.
**FIG. 7D** is a perspective view of a section of an inner sleeve into which the flow restriction member may be inserted.
**FIGS. 8A, 8B****,** **8C, 8D** are cross-sectional side views of a valve assembly having a flow restriction member, showing the sequential movement of the outer sleeve and the inner sleeve of the valve assembly.

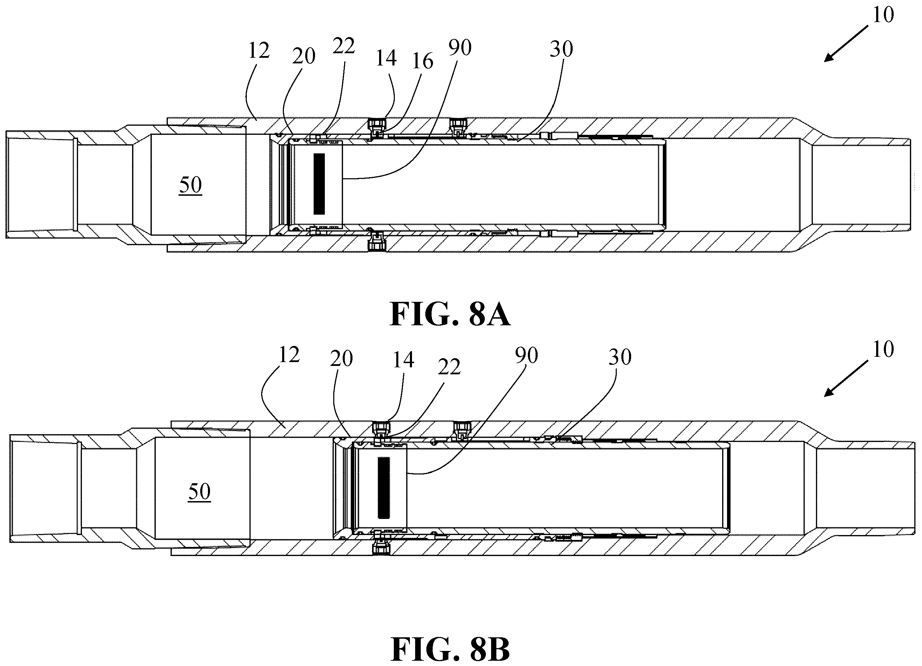

   **FIG. 8A** shows the outer sleeve and inner sleeve in the first position, where the ports are closed.
   **FIG. 8B** shows the outer sleeve and inner sleeve in the second position.

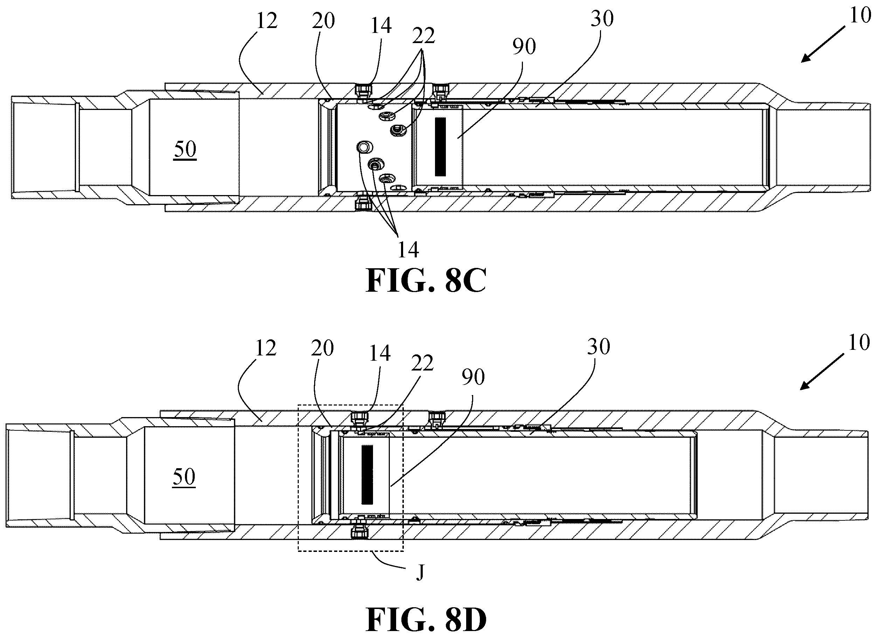

   **FIG. 8C** shows the inner sleeve in the open position.
   **FIG. 8D** shows the inner sleeve in the closed position, wherein the flow restriction member restricts flow through the ports in the tubular housing.

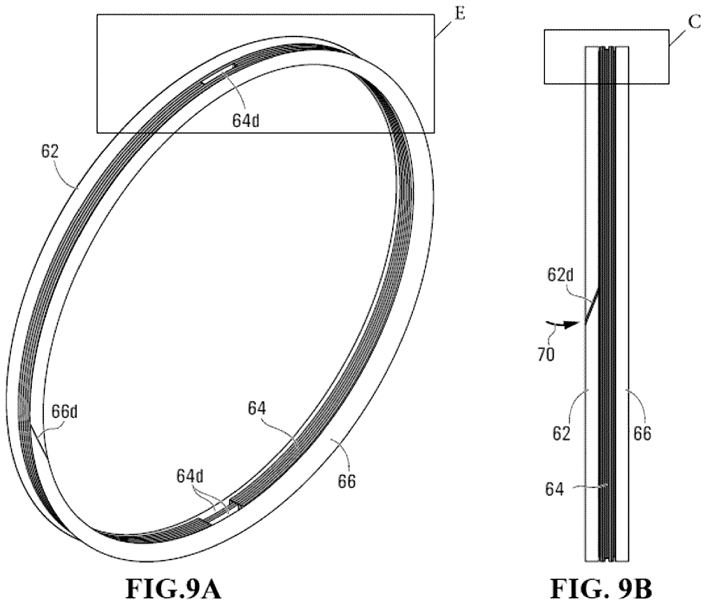

**FIG. 9A** is a perspective view of an embodiment of a sealing assembly.
**FIG. 9B** is a side view of the sealing assembly of **FIG. 9B****.**

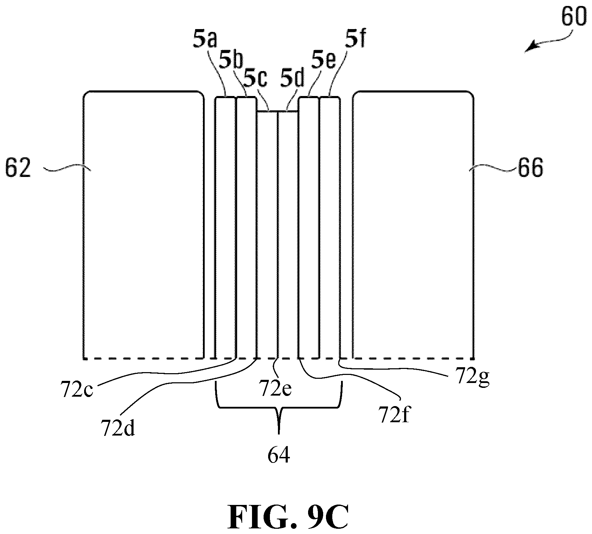

**FIG. 9C** is an enlarged view of area **C** in **FIG. 9B** showing the sealing assembly.

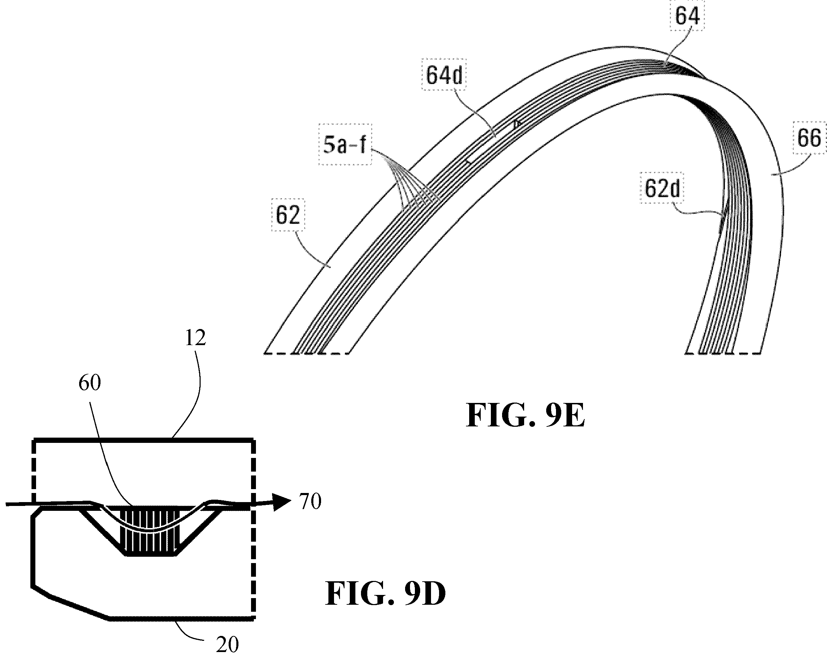

**FIG. 9D** is a schematic view showing the sealing assembly of **FIG. 9A** in a radial sealing groove of a valve assembly.
**FIG. 9E** is an enlarged view of area **E** of **FIG. 9A** showing the sealing assembly.

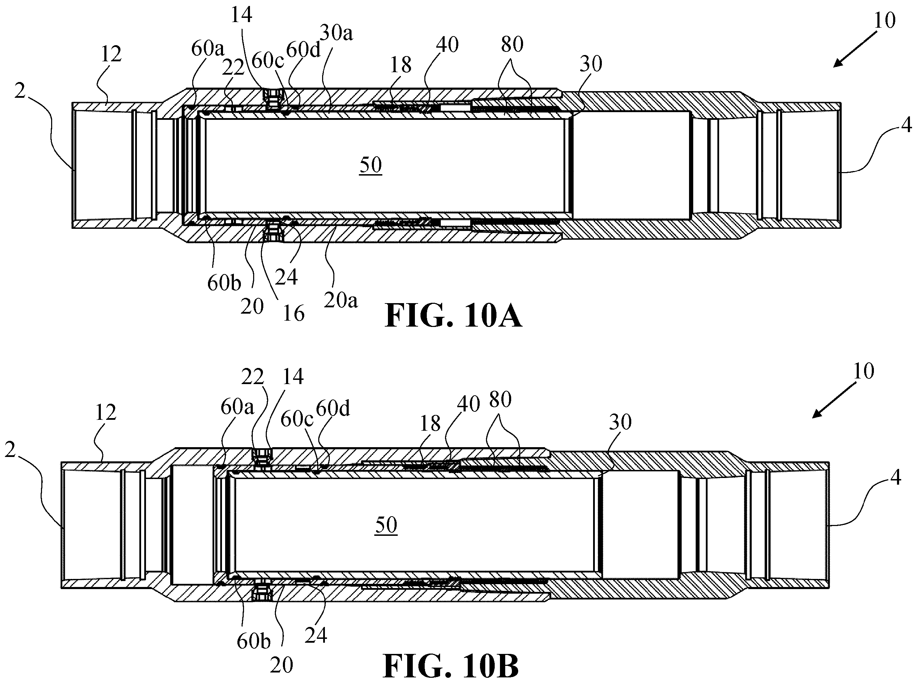

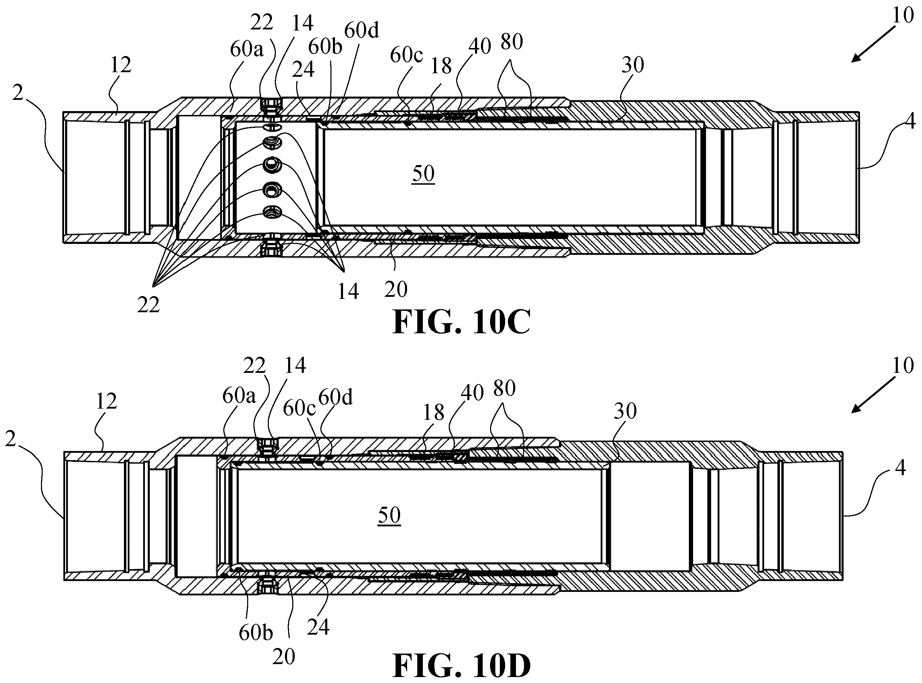

**FIGS. 10A, 10B****,** **10C, 10D** are cross-sectional side views of a valve assembly in accordance with one embodiment, showing the sequential movement of an outer sleeve and an inner sleeve of the valve assembly.
   **FIG. 10A** shows the outer sleeve and inner sleeve in the first position, where the ports are closed.
   **FIG. 10B** shows the outer sleeve and inner sleeve in the second position.
   **FIG. 10C** shows the inner sleeve in the open position.
   **FIG. 10D** shows the inner sleeve in the closed position.

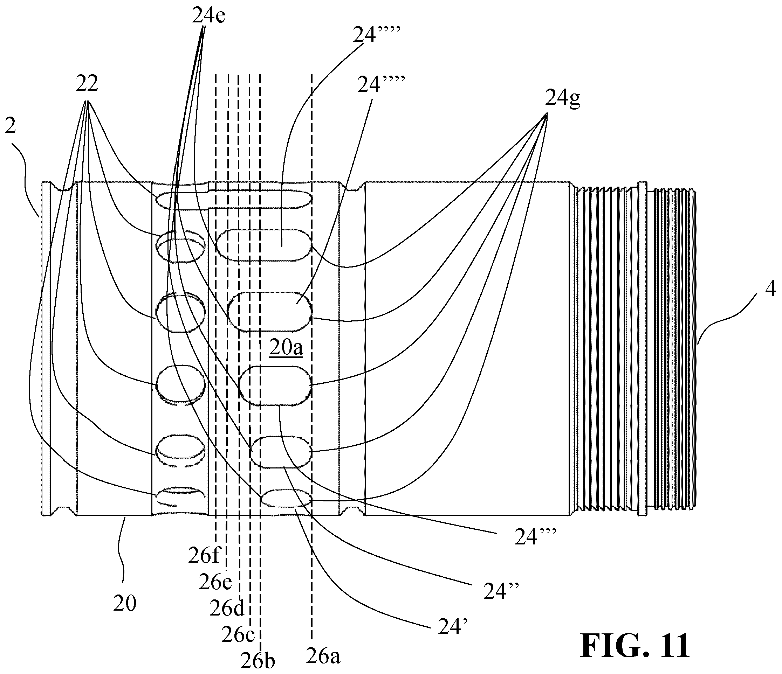

**FIG. 11** is a partial side view of an outer sleeve of the valve assembly showing the configuration of the slots in the outer sleeve to allow for sequential opening of the ports of the valve assembly.

### DETAILED DESCRIPTION

Illustrative implementations of one or more embodiments of the present disclosure are provided below, including numerous details to provide a thorough understanding of the disclosure. However, it will be apparent to one skilled in the art that various modifications can be made and/or that the specific details provided are not required to practice the present disclosure. The disclosure should in no way be limited to the illustrated and described embodiments, but may be modified and be within the full, intended scope of the present disclosure. A number of possible alternative features are introduced during the course of this description. It is to be understood that, according to the knowledge and judgment of persons skilled in the art, such alternative features may be substituted in various combinations to arrive at different embodiments of the present disclosure.

Prior art valve assemblies designed for hydrocarbon wells are generally not suitable for high temperature wells due to the elastomer seals used in the valve assemblies. Elastomers do not exhibit their normal properties at high temperatures. The temperature at which an elastomer can be used may greatly vary from elastomer to elastomer, but generally are no higher than 100 °C to 300 °C. As such, prior art valve assembly systems relying on elastomer seals cannot be used reliably at the temperatures found in many geothermal wells.

Embodiments of the valve assemblies disclosed herein are suitable for use in high temperature wellbores where temperatures of 200 °C or higher, and preferably 300 °C to 600 °C are found. The valve assemblies do not rely on polymeric materials, including elastomers, for forming seals, but instead creates seals using materials that can withstand high temperatures, including various metals. High temperature wells include geothermal wells and other well types where high temperatures may be encountered, such in situ mining wells and waste disposal wells.

The valve assemblies disclosed herein are suitable for injection and production operations in high-temperature wells, such as geothermal wells. Injection operations can include fracturing the formation using stimulation fluids, such as those described in U.S. Provisional Patent Application No. 63/191,792 and PCT Patent Application No. PCT/CA2022/050806. The valve assembly can be opened to allow a stimulation and/or injection fluid into the formation for fracturing. The valve assemblies are suitable for multistage fracturing operations.

Production operations include harvesting heat from the formation by injecting a working fluid into the geothermal well, using either a closed loop and/or open loop circulation. In a closed loop operation, the valve assembly may be re-closed to restrict the working fluid from coming into direct contact with the formation or fractured network containing the treatment fluid in one or more segments of the loop. In an open loop operation, the valve assembly can be open to allow the working fluid to flow between one or more zones in the formation and the surface, or it can be in a restricted position that restricts fluid flow between one or more zones in the formation and the well, or a substantially closed position to prevent the working fluid from coming into direct contact with one or more zones in the formation or fractured network. Restricting fluid flow into zones in the formation during production can be useful for regulating flow distribution. For example, flow can be restricted in zones where fluid is flowing too fast through the formation to be heated to the desired temperature before it is recovered, i.e., to manage the desired subcool. If flow is restricted enough, the restricted position may allow for restimulation of other zones.

Various aspects of embodiments of the valve assemblies will now be described with reference to the figures.

### Valve Assembly Positions

One embodiment of the valve assembly is shown in **FIGS. 1A-1D****.** Referring to **FIG. 1A****,** the sliding sleeve valve assembly **10** generally includes a tubular housing **12** with a fluid passageway **50** through the center of it, and an outer sleeve **20** and an inner sleeve **30** that are longitudinally slidable to change the function of the valve assembly. In this embodiment, the valve assembly has four positions: a first position shown in **FIG. 1A****,** a second position shown in **FIG. 1B****,** an open position shown in **FIG. 1C****,** and a closed position shown in **FIG. 1D****.** The various positions may be used to allow, prevent or restrict fluid flow between the exterior of the valve assembly and the fluid passageway **50.** The valve assembly may be incorporated in a wellbore string and used in a well to control fluid flow between the surrounding reservoir and the well surface.

The valve assembly **10** has an uphole end **2** and a downhole end **4.** There are ports **14** in the wall of the tubular housing **12,** extending between an outer surface **12a** and an inner surface **12b** of the tubular housing, which when open allow fluid flow through the ports.

In some embodiments as illustrated, the outer sleeve **20,** also referred to as the first sleeve, is disposed in the tubular **housing 12** and is longitudinally slidable with respect to the tubular housing. The outer sleeve **20** has openings **22** in its wall, through which fluid can flow between the fluid passageway **50** and the ports **14** in the tubular housing.

Each port **14** in the tubular housing **12** has a plug **16,** which initially provides a fluid seal in the port when the outer sleeve **20** is in the first position of **FIG. 1A****.** The plugs also couple the outer sleeve to the tubular housing. When downhole pressure is applied to the outer sleeve **20,** the plugs **16** shear, removing at least a portion of each plug which releases the outer sleeve from the tubular housing so that it moves from the first position in **FIG. 1A** to the second position shown in **FIG. 1B****.** Shearing the plugs also opens the ports **14.**

Examples of suitable plugs are described in the Applicant's U.S. Provisional Patent Application No. 63/191,622 and PCT Patent Application No. PCT/CA2022/050809.

The plugs have been described as being shearable, however the plugs may also be opened via other means, including but not limited to being dissolved and/or crushed.

In some embodiments as illustrated, the inner sleeve 30, also referred to as the second sleeve, is disposed in the outer sleeve 20 and is longitudinally slidable with respect to the tubular housing 12 and the outer sleeve 20.

The inner sleeve **30** is initially coupled to the outer sleeve **20** in the first position in **FIG. 1A** such that when the outer sleeve moves to the second position in **FIG. 1B****,** the inner sleeve moves with it. In the second position, the inner and outer sleeves decouple from one another, allowing the inner sleeve to be movable further downhole with respect to the outer sleeve and into the open position, shown in **FIG. 1C****.** In the open position, the outer sleeve openings **22** are substantially unobstructed by the inner sleeve, thereby allowing fluid flow between the fluid passageway and the ports **14** by way of the outer sleeve openings **22.** This open position provides the greatest fluid flow rate through the ports out of all the positions of the valve assembly and is generally suited for well production, injection and stimulation operations.

The open position provides a substantially open flow path between the ports and the fluid passageway. However, it is to be understood that the substantially open flow path may still include obstructions to fluid flow. For example, the plug in the port may not shear perfectly, leaving some debris in the port that impedes fluid flow. In another example, the outer sleeve openings **22** may not perfectly align with the ports **14** in the open position, or they may be of a different size or shape than the ports, both of which may impede fluid flow.

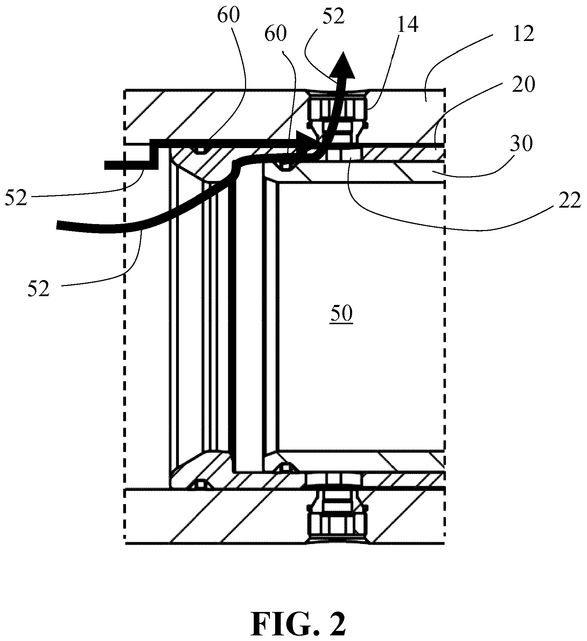

The inner sleeve **30** can be reclosed to move it from the open position in **FIG. 1C** to the closed position in **FIG. 1D****.** In the closed position, the inner sleeve covers the outer sleeve openings **22,** thereby restricting fluid flow between the fluid passageway **50** and the openings **22** and ports **14.** Some fluid flow may still be permitted when the valve assembly uses sealing assemblies **60** that are imperfect seals that don't completely prevent fluid flow, but rather restrict fluid flow. **FIG. 2** shows the flow pathway **52** through one of the sealing assemblies **60** when the valve assembly is in the closed position of **FIG. 1D****.**

The closed position of the valve assembly that restricts the flow rate through the ports can be useful for regulating the distribution of fluid flow in a geothermal well. The inner sleeve may be moved between the open and closed position as many times as needed during use, to open or close pathways through the reservoir or through a closed loop to manage subcool.

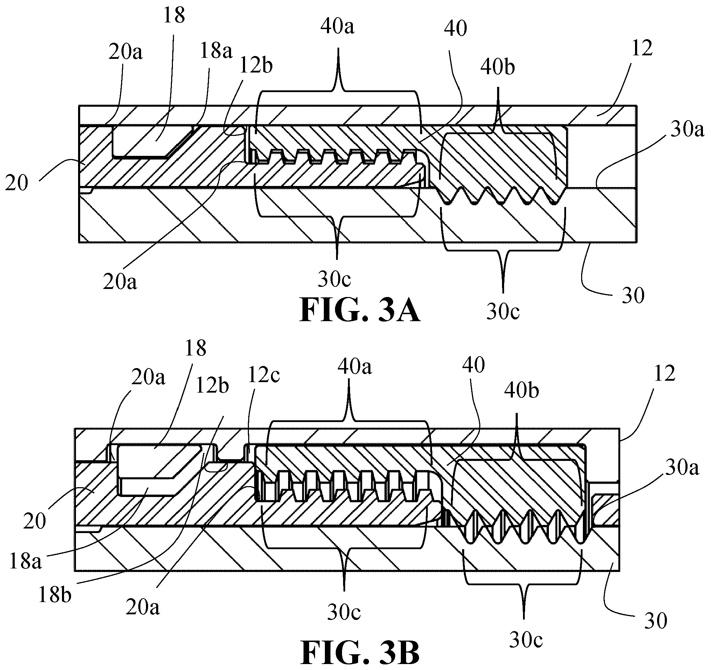

In some embodiments, the valve assembly **10** includes a locking member **18** to prevent the outer sleeve **20** from moving back to the first position in **FIG. 1A** from the second position in **FIG. 1B****.** Referring to **FIGS. 3A, 3B****,** the locking member **18** is preferably a ring disposed in an exterior lock channel **18a** on the outer surface **20a** of the outer sleeve. When the outer sleeve moves into the second position, the ring expands into an interior lock channel **18b** on the inner surface **12b** of the tubular housing **12,** thereby preventing the outer sleeve from sliding with respect to the tubular housing.

The outer sleeve **20** and inner sleeve **30** may be initially coupled together via a coupling member **40,** which is best seen in **FIGS. 3A, 3B****.** The coupling member **40** preferably comprises an annular member that can engage and disengage with the outer and inner sleeves.

In the illustrated embodiments, the coupling member **40** has a first and second set of radial grooves **40a, 40b** on its inner surface that engage with corresponding radial grooves **20c, 30c** on the outer surface of the outer sleeve and inner sleeve, respectively. The radial grooves may comprise a threaded connection, for example where the radial grooves wind in a spiral formation around the inner surface of the coupling member and the outer surface of the outer sleeve and inner sleeve. When the outer and inner sleeve are in the first position, shown in **FIGS. 1A****,** **3A****,** the radial grooves **40a, 40b** of the coupling member interlock with the corresponding radial grooves **20c, 30c** in the outer and inner sleeves to couple the sleeves together. When the outer and inner sleeve move into the second position, shown in **FIGS. 1B****,** **3B****,** the coupling member **40** expands into a recess **12c** in the tubular housing inner surface **12b,** thereby disengaging the radial grooves from the corresponding radial grooves in the outer and inner sleeves and uncoupling the outer and inner sleeves. Once the outer and inner sleeves are uncoupled, the inner sleeve can move longitudinally with respect to the outer sleeve into the open position in **FIG. 1C****.**

While the coupling member **40** has been described and illustrated as engaging and disengaging with both the inner and outer sleeve, it can also maintain engagement with only one of the inner and outer sleeves while disengaging from the other sleeve, which also provides the intended function of decoupling the inner and outer sleeves.

The valve assembly **10** further comprises a collet member **80** around the inner sleeve **30** that retains the inner sleeve in its various positions by engaging with various retention grooves in the inner sleeve outer surface **30a.** There is a first retention groove **32a** engaged with the collet when the inner sleeve **30** is in the first position of **FIG. 1A****,** a second retention groove **32b** for retaining the inner sleeve in the second position of **FIG. 1B** and the closed position of **FIG. 1D****,** and a third retention groove **32c** for retaining the inner sleeve in the open position shown in **FIG. 1C****.** Note that the first retention groove **32a** may not be necessary for retaining the inner sleeve **30** in the first position, since the plugs **16** and coupling member **40** retain the outer sleeve **20** and inner sleeve **30** in the first position.

The collet member **80** preferably includes collet fingers which exert a bias load against the retention grooves of the inner sleeve **30** to retain the inner sleeve in position. A shifting tool may be used to overcome the bias load of the collet fingers, thereby allowing the inner sleeve to shift to another position.

### Sealing Assemblies

In some embodiments, the valve assembly **10** includes one or more sealing assemblies **60** for restricting flow between the fluid passageway **50** and the ports **14.** The sealing assemblies **60** may be imperfect seals that don't completely prevent fluid flow, but rather restrict fluid flow. The sealing assemblies are made of one or more materials that can withstand high temperatures above 320 °C, including non-polymeric materials such as metals, graphite, carbon composite, silicone, silica, vermiculite, fiberglass, compressed non-asbestos, ceramic fiber, and calcium alumina silicate. The sealing assemblies do not include polymeric materials, including elastomers, or other materials that do not provide effective sealing at high temperatures above 320 °C. The sealing assemblies preferably have low drag, low contact pressure, and are anti-galling to facilitate the movement of the outer sleeve **20** and inner sleeve **30** with low pressure.

The sealing assemblies **60** may be used throughout the valve assembly **10** to provide seals, which may be imperfect seals, between various members. For example, there may be one or more sealing assemblies between the tubular housing **12** and outer sleeve **20,** including sealing assembly **60a** uphole of the ports **14** and sealing assembly **60d** downhole of the ports **14** in the position shown in **FIG. 1A****.** There may be one or more sealing assemblies between the outer sleeve **20** and the inner sleeve 30, including sealing assembly **60b** uphole of the openings **22** and sealing assembly 60c downhole of the openings **22** when the inner sleeve is in the closed position **(****FIGS. 1B****, 1D).** When the inner sleeve is in the open position **(****FIG. 1C****),** the uphole sealing assembly 60b may be positioned downhole of the openings **22,** since it is not needed to restrict flow through the openings in this position.

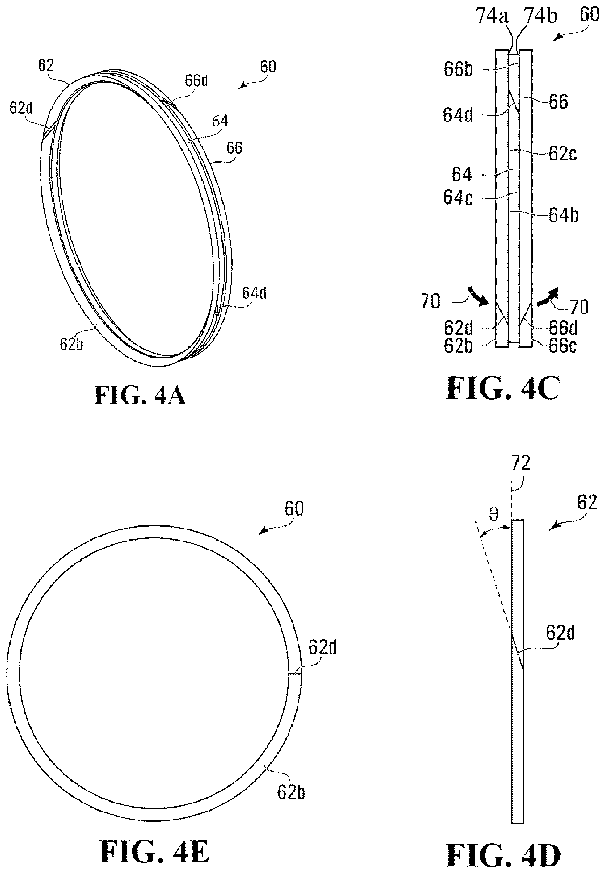

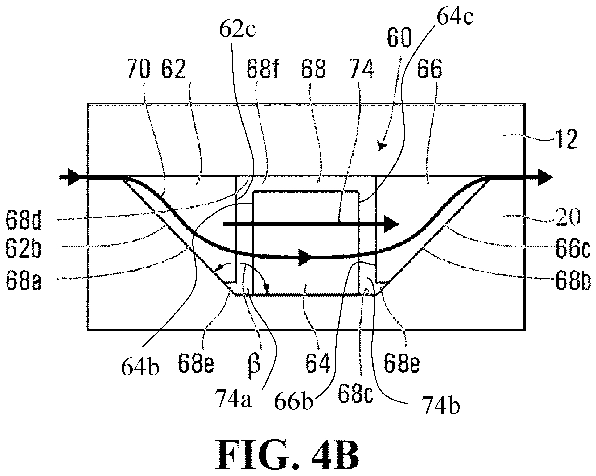

One embodiment of a sealing assembly **60** is shown in **FIGS. 4A** to **4E****.** In this embodiment, the sealing assembly comprises multiple rings **62, 64, 66** arranged in a radial sealing groove **68.** The radial sealing groove is defined by a first side wall **68a,** a second side wall **68b,** a bottom surface **68c,** and a top surface **68d,** as best shown in **FIG. 4B****.** The rings substantially fill the volume of the radial sealing groove.

The sealing assembly creates a long tortuous fluid flow path **70** through the radial sealing groove **68** through the rings **62, 64, 66,** thereby slowing down and restricting fluid flow through the sealing assembly. The fluid flow path **70** can be in a downhole direction or an uphole direction. The fluid flow path can be from the fluid passageway to the outside of the valve assembly, or from the outside of the valve assembly into the fluid passageway. The sealing assemblies may restrict fluid flow by at least 50%, preferably at least 75%, and more preferably at least 90%. This flow restriction may occur at both relatively high and relatively low pressure, for example 2000 psi and 60 psi.

Each ring **62, 64, 66** of the sealing assembly **60** preferably has a ring body with a first side face **62b, 64b, 66b** and a second side face **62c, 64c, 66c,** as shown in **FIG. 4C****.** The rings may be positioned side by side in the radial sealing groove **68,** such that the side faces of adjacent rings abut one another. There may be an intra-ring gap **62d, 64d, 66d** through each ring body to allow fluid flow through the ring body between the first side face **62b, 64b, 66b** and the second side face **62c, 64c, 66c** of each ring. In the illustrated embodiment, each intra-ring gap **62d, 64d, 66d** is an angular slit through the ring body that is at an angle **θ** with respect to a radial axis **72** of the ring, as shown in **FIG. 4D****.** The angle **θ** is preferably 45 degrees or less, preferably 30 degrees or less, and more preferably 15 degrees or less. The smaller the angle, the longer the flow path through the gap. The gap is preferably about 0 to about 0.125" wide when there is no pressure applied to the ring, and more preferably about 0 to about 0.020" wide.

There may also be an inter-ring gap between adjacent rings in the sealing assembly to allow fluid flow between the rings. For example, referring to FIG. 4B and 4C, there may be an inter-ring gap 74a between the second side face 62c of the end ring 62 and the first side face 64b of the center ring 64. There may also be an inter-ring gap 74b between the second side face 64c of the center ring and the first side face 66b of the end ring 66. The gap is preferably about 0 to about 0.125" wide when there is no pressure applied to the sealing assembly, and more preferably about 0 to about 0.020" wide. The inter-ring gaps **74a, 74b** form part of the tortuous fluid flow path through the sealing assembly. For example, referring to **FIGS. 4B****,** **4C****,** the fluid flow path is as follows: through the intra-ring gap **62d** in the end ring **62;** through the inter-ring gap **74a** between rings **62, 64;** through the intra-ring gap **64d** in the center ring **64;** through the inter-ring gap **74b** between rings **64, 66;** and through the intra-ring gap **66d** in the end ring **66.** This flow pathway may also be reversed if fluid flow is moving in the opposite direction, i.e., from end ring **66** towards end ring **62.** While the inter-ring gaps and intra-ring gaps are referred to as "gaps", the gaps do not necessarily comprise a void space, i.e., the gaps may have a width of 0" or near 0". This is particularly evident when pressure is applied to the sealing assembly which may reduce the width of the gaps.

As best shown in **FIG. 4B****,** the radial sealing groove side walls **68a, 68b** may be at an obtuse angle **β** to the radial sealing groove bottom surface **68c.** The obtuse angle may be from about 120 degrees to about 150 degrees. The end rings **62, 66** in the sealing assembly 60 preferably have angled side faces **62b, 66c** that face the radial sealing groove side walls **68a, 68b** and are substantially parallel with the side walls. The side faces **64b, 64c** of the middle ring **64,** and the side faces **62c, 66b** of the outer rings **62, 66** that face the middle ring are preferably substantially parallel with one another and at a right angle to the radial sealing groove bottom surface **68c.** In other embodiments, the radial sealing groove side walls **168a, 168b** are at a right angle to the radial sealing groove bottom surface **168c.**

The long tortuous flow path **70** through the sealing assembly from one end of the sealing assembly to the other end involves fluid flowing through the intra-ring gaps **62d, 64d, 66d** and the inter-ring gaps **74a, 74b.** The intra-ring gaps **62d, 64d, 66d** in adjacent rings are preferably offset from one another, i.e., not in alignment, as can be seen in **FIG. 4A****,** to lengthen the fluid flow path by forcing the fluid to take a longer path through the inter-ring gaps **74a, 74b** to reach the next intra-ring gap.

As fluid pressure increases on the sealing assembly **60,** the rings **62, 64, 66** may be pushed toward the side wall of the radial sealing groove **68** that is opposite the direction of fluid flow, which in the case of the fluid flow path **70** in **FIG. 4B****,** is towards the second side wall **68b,** shown by arrow **74.** This increases the pressure between adjacent rings and between the end ring **66** and the side wall **68b,** compressing the sealing assembly **60** against the side wall **68b.** This compression may increase the resistance encountered on the fluid flow path **70,** such that an increase in fluid pressure increases the sealing ability of the sealing assembly **60** and decreases the flow rate of the fluid through the sealing ring.

The sealing assembly **60** has been illustrated and described as having three rings. In alternative embodiments, the center ring may be omitted so that there are only two rings. The two rings may have angled side faces that face the radial sealing groove side walls. Alternatively, one or more additional rings can be added between the end rings such that the sealing assembly has four or more rings.

The diameter of the sealing assembly rings **62, 64, 66** may vary to affect the flow path through the sealing assembly. In the embodiment shown in **FIG. 4B****,** the end rings **62, 66** are sized to abut the top surface **68d** of the radial groove, with a small inner gap **68e** between the end rings and the radial groove inner surface **68c.** The center ring **64** is sized to abut the bottom surface **68c** of the radial groove, with a small outer gap **68f** between the center ring and the radial groove top surface **68d.**

An embodiment of the sealing assembly **60** is shown in **FIGS. 9A** to **9E****.** In this embodiment, the outer rings **62, 66** are similar to the embodiment shown in **FIGS. 4A** to **4E****;** however, the center ring **64** is a coiled member comprising a plurality of rings that are helically wound. The coiled member may be referred to as a laminar seal ring. The fluid flow path through the helical rings may comprise one or more intra-ring gaps **64d** (see **FIG. 9A****)** in the bodies of the helical rings as well as inter-ring gaps **72c,d,e,f,g** (see **FIG. 9C****)** between adjacent rings to allow fluid to flow between adjacent helical rings and through the rings. In the illustrated embodiment, as best shown in **FIG. 9C****,** the center ring comprises six helical rings **5a-f.** The diameter of the rings **62, 64, 66** may vary to affect the flow path through the sealing assembly. The diameter of the helical rings of the coiled member **64** may also vary, as shown in **FIG. 9C** where helical rings **5a,b,e,f** have a larger outer diameter than helical rings **5c,d.**

While the example of the sealing assembly **60** in **FIGS. 9A** to **9E** illustrates a coiled member **64** sandwiched between outer rings **62, 64,** the sealing assembly may omit one or more of the outer rings. For example, the sealing assembly may comprise only the coiled member with the helically wound rings. It is to be understood that even though the helically wound rings may be connected together, they are still considered to comprise multiple rings since they wind around a center axis more than once.

It is to be understood that the term "ring" encompasses a ring-shaped member that may form a discontinuous ring. For example, there may be one or more intra-ring gaps in the circumference of the ring as described and illustrated herein.

The flow rate through the sealing assembly **60** can be adjusted as needed by adjusting the sealing assembly to make changes that affect the length and/or tortuosity of the flow path. For example, the angle **θ** of the intra-ring gaps **62d, 64d, 66d** in the ring bodies can be adjusted. Another example is adjusting the placement of the intra-ring gaps **62d, 64d, 66d** in adjacent rings **62, 64, 66,** since the more offset the gaps are between adjacent rings, the longer the flow path. Another way to increase the length and tortuosity of the flow path is to increase the number of rings in the sealing assembly. The width of the intra-ring gaps and inter-ring gaps may also be adjusted to affect the flow path.

### Opening of Ports

In some embodiments, there are multiple ports **14** in the tubular housing **12** which contain plugs **16** that are engaged with slots **24** in the outer surface **20a** of the outer sleeve **20.** Applying pressure to the outer sleeve causes the plugs to shear and the ports **14** to open, thereby moving the outer sleeve from the first position **(****FIG. 1A****)** to the second position **(****FIG. 1B****).**

The ports **14** may be arranged such that the plugs **16** in the ports can be sheared sequentially. The sequential shearing may be from the uphole direction to the downhole direction, or from the downhole direction to the uphole direction. By shearing the plugs sequentially, less force is required to open the ports than if all the plugs were sheared simultaneously. This means that for a given flow area, as determined by the size and number of the ports, less force is required to open the ports. It also means that the flow area through the ports can be increased without requiring an increase in the pressure required to open the ports.

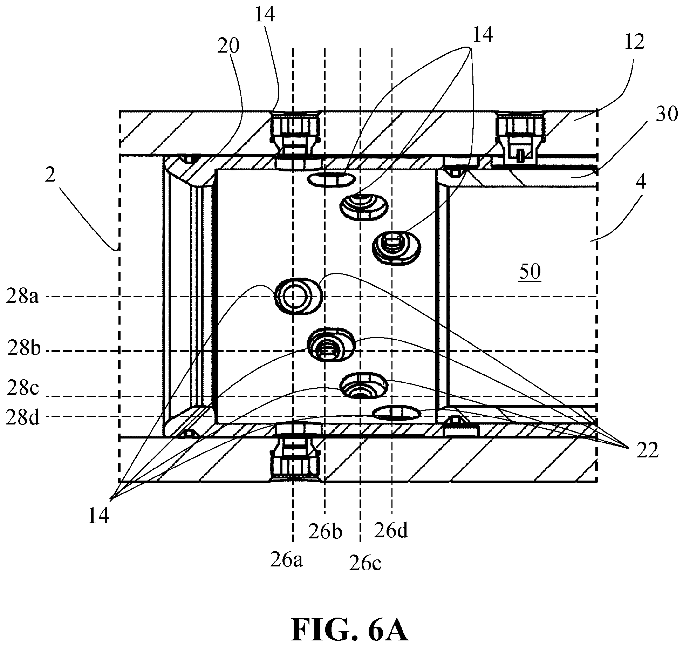

The ports **14** and plugs **16** may be arranged along multiple transverse planes in the tubular housing, as best seen in **FIG. 6A****,** which shows four transverse planes **26a,b,c,d** on which ports **14** are positioned. Having the ports on more than one transverse plane allows for the plugs in the ports to be sheared sequentially from the uphole direction to the downhole direction or vice versa. In **FIG. 6A****,** the arrangement allows for shearing. from the first plane **26a** to the fourth plane **26d.**

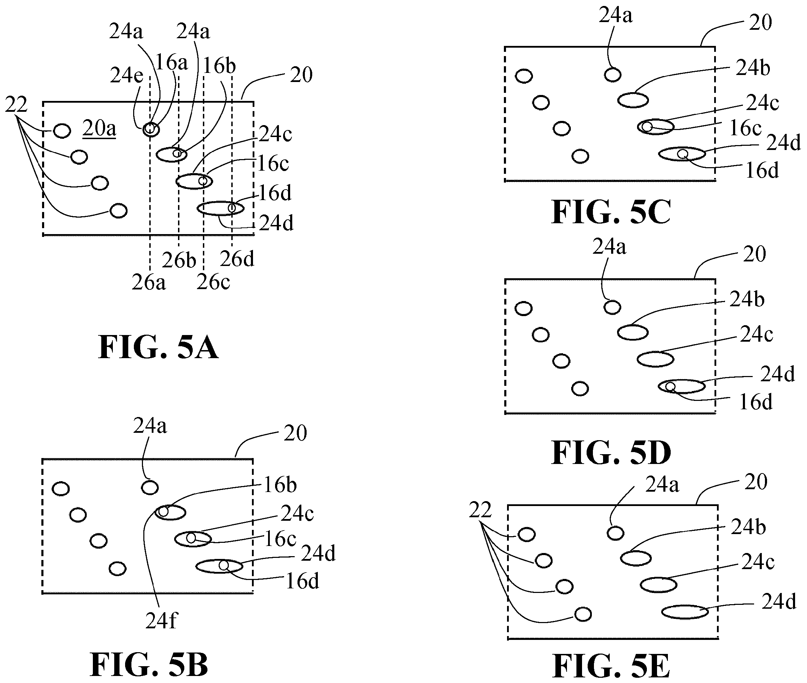

**FIGS. 5A-5E** show a portion of the outer sleeve **20** having slots **24a,b,c,d** in the outer surface **20a** that retain the plugs **16a,b,c,d** and cause the plugs to shear when pressure in a downhole direction is applied to the outer sleeve. The slots **24a,b,c,d** are preferably just in the outer surface **20a,** rather than extending all the way through the wall of the outer sleeve **20.**

**FIGS. 5A-5E** illustrate one embodiment of the sequential shearing of the plugs **16a,b,c,d** in the multiple transverse planes **26a,b,c,d** as the outer sleeve moves from the first position **(****FIG. 5A****)** to the second position **(****FIG. 5E****),** thereby opening the ports **14** in the tubular housing and creating a flow path between the openings **22** in the outer sleeve and the ports.

The slots **24a,b,c,d** in the outer housing may have different lengths along the longitudinal plane of the valve assembly, allowing for sequential shearing of the plugs **16a,b,c,d** retained in the slots. In **FIG. 5A****,** the plugs are all intact and the ports are closed. As pressure is applied on the outer sleeve **20,** which in the illustrated example is in a downhole direction (i.e. from the left side to the ride side of the drawings in **FIGS. 5A** to **5E****),** the pressure on the first plug **16a** by the uphole end **24e** of the slot **24a** shears the first plug which is engaged with the shortest slot, moving the outer sleeve slightly downhole to the position in **FIG. 5B****.** As this movement occurs, the intact plugs **16b,c,d** slide within their respective slots **24b,c,d.**

**In** **FIG. 5B****,** the second plug **16b** is at the uphole end **24f** of slot **24b,** and applying pressure shears the second plug to move the outer sleeve further downhole to the position in **FIG. 5C****.** This can be repeated for the third plug **16c** to move it from the position in **FIG. 5C** to **FIG. 5D****,** and for the fourth plug **16d** to move it from the position in **FIG. 5D****.** Once the fourth plug **16d** has sheared, the outer sleeve **20** may be released from the tubular housing **12,** allowing the outer sleeve to move fully downhole to the second position in **FIG. 5E****.** This causes the shearing of the plugs based on the length of the slot in which they are engaged, from the shortest to the longest slot.

In the second position of **FIG. 5E****,** the outer sleeve has moved downhole enough that the ports from which the plugs sheared may be aligned with the openings **22** in the outer sleeve **20.** This is seen in **FIG. 6A****,** where the inner sleeve **30** has moved into the open position, creating a fluid flow path between the ports **14,** openings **22** and fluid passageway **50.**

**FIG. 5A** illustrates one plug **16a,b,c,d** in each transverse plane **26a,b,c,d,** however there can be multiple plugs in one or more of the transverse planes. When there are multiple plugs in a transverse plane, all the plugs in that plane may be configured to shear substantially simultaneously.

**FIG. 5A** illustrates four transverse planes containing plugs, however there may be various other numbers of transverse planes.

The number of ports in each transverse plane can vary. For example, there may be four ports in the first transverse plane, and two ports in the second, third and fourth transverse plane, for a total of 10 ports. Alternatively, each transverse plane may contain the same number of ports.

The ports **16** in the various transverse planes may be on the same longitudinal plane such that they are in line with each other, or they may be staggered on different longitudinal planes as shown in **FIG. 6A****,** where there are various longitudinal planes **28a,b,c,d** that the ports are on which creates a spiral pattern of ports around the tubular housing **12.**

Another example of a port **14** and plug **16** configuration that allows for sequential shearing is shown in **FIGS. 10A** to **10D** and **FIG. 11****.** In this embodiment, the ports and plugs are arranged on the same transverse plane. The position and length of the slots **24** in the outer surface **20a** of the outer sleeve **20** determines the sequence in which the plugs shear to open ports **14.** The slots **24** have various lengths along the longitudinal plane of the valve assembly, with the downhole edges **24g** of the slots being aligned along a transverse plane **26a.** The uphole edges **24g** of the slots are positioned along different transverse planes **26b,c,d,e,f.** When the outer sleeve moves from the first position (FIG. **10A****)** to the second position **(****FIG. 10B****),** the plugs **16** engaged with the slots **24** slide within the slots. When the outer sleeve reaches a position where the uphole edge **24g** of the slot abuts the plug and force is applied, the plug shears. In the example shown in **FIG. 11A,** the plugs shear sequentially based on the length of slot they are engaged with, from the shortest slot to the longest slot, i.e. in the order **24', 24", 24‴, 24ʺʺ, 24‴ʺ.**

It is to be understood that while the illustrated examples may show shearing the plugs from the downhole direction to the uphole direction, the shearing sequence may be reversed, i.e. from the uphole to the downhole direction, by adjusting the features of the assembly that determine the shearing sequence (for example, the position and length of the slots).

The plugs **16** retained in the ports **14** may be closed-end hollow frangible plugs, sometimes referred to as kobes. A closed-end hollow frangible plug may have a closed-end that inserts into the slot **24** in the outer sleeve **20.** When the plug is sheared, the closed-end of the plug breaks off to open up a hollow channel through the plug, thereby creating a flow pathway through the plug and opening up the port **14** that the plug is in.

The valve assembly **10** may comprise an alignment member to prevent rotation of the outer sleeve **20** with respect to the tubular housing **12.** In **FIGS. 1A, 1B****,** the alignment member is shown as an alignment plug **42** that slides within a longitudinal slot **44** in the outer sleeve outer surface **20a** that is sized to allow longitudinal movement but prevent rotation. This alignment plug **42** does not shear during movement of the outer sleeve. In the example shown in **FIG. 11****,** slot **24f** is an alignment slot that is engaged with an alignment member of the tubular housing **12** to prevent rotation of the outer sleeve **20** with respect to the tubular housing during movement of the outer sleeve **20** from the first position to the second position. The alignment member may be a plug or another suitable alignment member such as a key or pin. Other suitable ways for engaging an alignment member with the outer sleeve may be used.

### Flow Restriction Member

In some embodiments, the valve assembly **10** includes a flow restriction member **90** for restricting fluid flow between the fluid passageway **50** and the ports **14.** In the embodiment shown in **FIGS. 8A-D,** the flow restriction member 90 is a sleeve that is operatively engaged with an end of the inner sleeve **30** such that it slides with the inner sleeve between the various positions of the inner sleeve, i.e., the first position in **FIG. 8A****,** the second position in **FIG. 8B****,** the open position in **FIG. 8C****,** and the closed position in **FIG. 8D****.**

In the closed position in **FIG. 8D****,** the flow restriction member **80** is positioned over the openings **22** in the outer sleeve **20** to restrict flow through the openings and thus through the ports **14.** In the open position in **FIG. 8C****, the** flow restrictor does not cover the outer sleeve openings **22** and thus does not restrict flow through the openings **22** and ports **14.**

**FIG. 8A** illustrates the outer sleeve **20** and inner sleeve **30** in the first position, where the flow restrictor covers the openings **22,** but the ports **14** are closed and thus the flow restrictor isn't being used to restrict flow through the ports in this position.

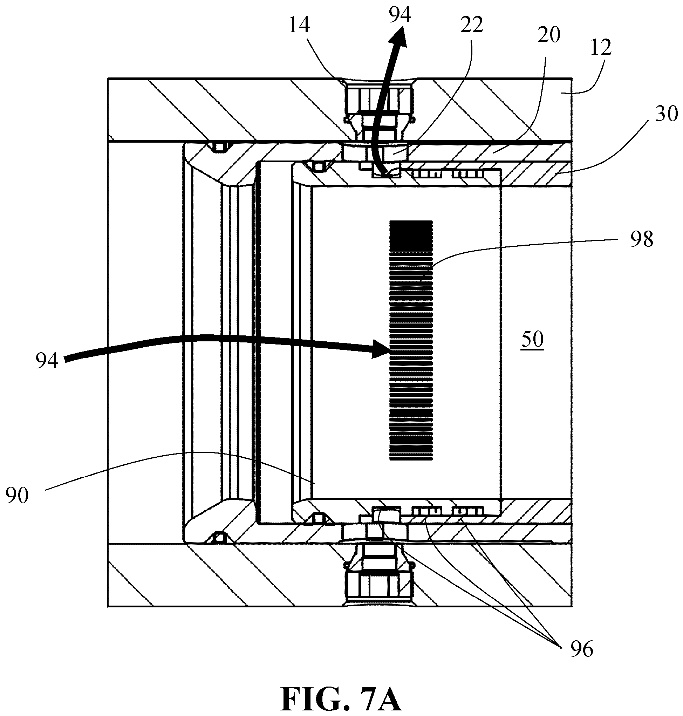

**FIG. 7A** shows a flow restriction member **90** in the valve assembly with the inner sleeve in the closed position such that the flow restriction member is restricting flow through the ports **14.** The flow restriction member **90** may provide a long tortuous flow path **94** between the fluid passageway **50** in the inner sleeve **30** and the outer sleeve openings **22** and ports **14** in the tubular housing **12.** Restricting fluid flow through the flow path **94** may be accomplished by having slits **98** through the wall of the flow restriction member that lead to grooves **96** in the outer surface **30a** of the inner sleeve wall and eventually to the outer sleeve openings **22.** The slits **98** also act as a coarse filter.

The flow path **94** in **FIG. 7A** is shown exiting the valve assembly, but it can also be reversed such that fluid is entering the valve assembly fluid passageway **50** from outside the valve assembly.

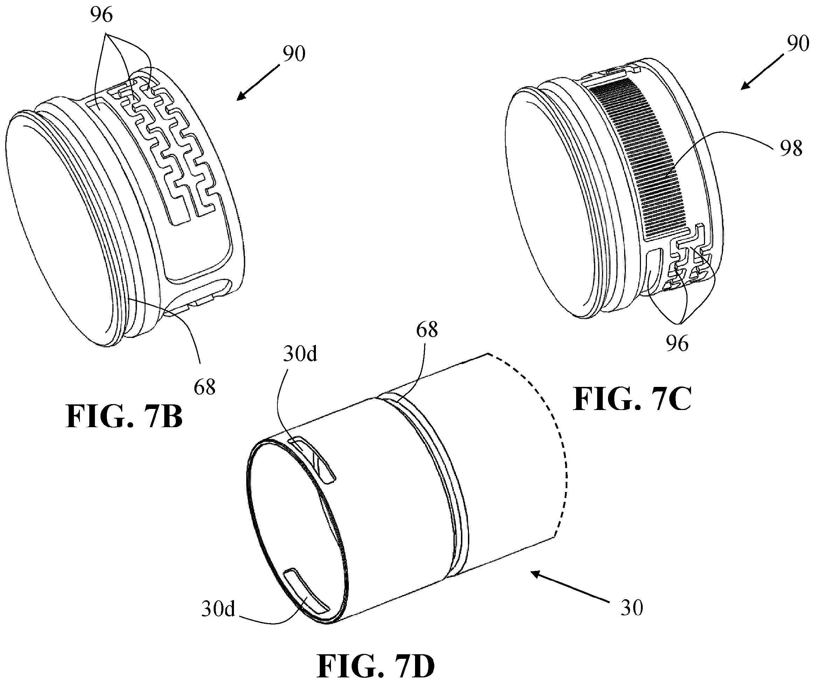

**FIGS. 7B, 7C** illustrate the flow restriction member **90** on its own, showing one embodiment of the slits **98** and the grooves **96** that provide the long tortuous flow path. **FIG. 7D** shows an embodiment of the end of the inner sleeve **30,** wherein the flow restriction member **90** can be inserted such the fluid flows through the flow restriction member **90** and out an opening **30d** in the inner sleeve wall that may align at least partly with the flow path of the flow restriction member, for example with at least part of the grooves **96.**

The flow restriction member **90** may be designed to slow fluid flow but not stop it completely. The flow restriction member can be used in addition to the sealing assemblies to provide a higher flow rate through the ports **14** than if the sealing assemblies were used on their own and the inner sleeve wall covered the outer sleeve openings **22,** but a lower flow rate than when the ports are completely open (i.e., when the inner sleeve is in the open position and not covering outer sleeve openings **22).** This intermediate flow rate provided by the flow restriction member **90** in the closed position of **FIGS. 8D** **and** **7A** may be useful for certain operations in the wellbore, such as regulating flow distribution.

The flow restriction member **90** can be configured differently than described and illustrated while still serving the same purpose of slowing the flow rate through the ports in the valve assembly. Examples of suitable flow restriction members are described in U.S. Provisional Patent Application No. 63/163,364 and Canadian Patent Application No. 3,100,997.

### Changing Configurations of the Valve Assembly

The valve assembly **10** may be moved between its various configurations using a shifting tool. The shifting tool may apply pressure to the outer sleeve **20** and/or inner sleeve **30** to shift the sleeves between positions, i.e. the first position of **FIGS. 1A****,** **8A****,** 10A the second position of **FIGS. 1B****,** **8B****,** **10B** the open position of **FIGS. 1C****,** **8C****,** **10C** and the closed position of **FIGS. 1D****,** **8D****,** **10C****.** Alternatively, the shifting tool may apply tension and/or compression to the inner and/or outer sleeves to shift them. The shifting tool may engage with the profile of the outer sleeve and/or inner sleeve to allow for shifting to occur. The shifting tool may be conveyed by wireline or by tubing. The shifting tool may be activated electrically and/or hydraulically.

Shifting tools are generally described in International PCT Patent Publication No. WO 2020/181,359 A1.

Alternatively, instead of using a shifting tool, an isolation member such as a ball or dart can be dropped into the valve assembly to allow an increase in pressure uphole of the isolation member, thereby causing the inner and outer sleeve to shift into the various positions.

The valve assembly **10** is made of one or more materials that can withstand high temperatures, for example at least 300 °C, preferably or at least 350 °C, more preferably at least 400 °C, more preferably at least 500 °C, and more preferably at least 600 °C. Any seals between components of the valve assembly are preferably made of non-polymeric and non-elastomeric materials. Suitable seal materials that can withstand high temperatures include any of the following: metals, graphite, carbon composite, silicone, silica, vermiculite, fiberglass, compressed non-asbestos, ceramic fiber and calcium alumina silicate. This applies to all the valve assembly components, including the tubular housing **12,** the outer sleeve **20,** the inner sleeve **30,** the plugs **16,** the sealing assembly **60,** the locking member **18,** the coupling member **40,** the alignment member **42,** the collet member **80,** and the flow restriction member **90.**

The valve assembly can withstand high pressures, for example pressures of at least 5000 psi, and more preferably at least 10,000 psi.

Although various members of the valve assembly have been described as separate members or assemblies, one of more of these members or assemblies may be combined together into one member having the same functions as the separate members/assemblies. For example, the locking member **18,** coupling member **40,** collet member **80,** alignment member **42** and/or one or more sealing assemblies **60** may be combined together.

Numerous modifications and variations of the present disclosure are possible in light of the above teachings. It is therefore to be understood that within the scope of the appended claims, the disclosure may be practiced otherwise than as specifically described herein.

## Claims

1. A valve assembly (10) for downhole use in a high temperature well comprising:
a tubular housing (12) having:
a housing wall having an inner surface (12b) and an outer surface (12a);
a fluid passageway (50) defined within the tubular housing; and
at least one port (14) in the housing wall for allowing fluid communication between the fluid passageway and outside the tubular housing;
a first sleeve (20) disposed in the tubular housing and longitudinally slidable with respect to the tubular housing; and
at least one sealing assembly (60) for restricting fluid flow between the fluid passageway and the at least one port (14), comprising:
at least one ring-shaped member (62,64,66) in a radial groove (68) that creates a tortuous flow path (70) through the at least one ring-shaped member (62,64,66) from a first side (62b,64b,66b) of the radial groove (68) to a second side (62c,64c,66c) of the radial groove (68) to restrict fluid flow through the at least one sealing assembly (60).

2. The valve assembly of claim 1, wherein the valve assembly (10) can withstand temperatures of at least 300 °C, preferably at least 400 °C, more preferably at least 500 °C, and more preferably at least 600 °C.

3. The valve assembly of claim 1 or 2, wherein the at least one sealing assembly (60) consists of non-polymeric material, and preferably consists of metal.

4. The valve assembly of any one of claims 1-3, wherein the high temperature well is a geothermal well.

5. The valve assembly of any one of claims 1-4, wherein the at least one ring-shaped member comprises a plurality of rings (62,64,66).

6. The valve assembly of any one of claims 1-5, wherein the at least one ring-shaped member comprises a coiled member (64) having a plurality of rings.

7. The valve assembly of claim 5 or 6, wherein the rings are arranged side by side in the radial groove, and each ring has a body with a first side face (62b,64b,66b) and a second side face (62c,64c,66c).

8. The valve assembly of claim 7, wherein at least one of the rings has a gap (62d,64d,66d) in its body for allowing fluid flow through the body between the first and second side faces, and the gap preferably comprises a slit through the body of the ring at an angle with respect to the radial axis of the ring.

9. The valve assembly of claim 8, wherein multiple rings comprise gaps through their bodies, and the gaps of adjacent rings are not aligned.

10. The valve assembly of any one of claims 5-9, wherein there is an inter-ring gap (74a) between adjacent rings for allowing fluid flow between adjacent rings.

11. The valve assembly of any one of claims 1-10, wherein the radial groove is defined by a first side wall (68a), a second side wall (68b), a top surface (68d) and a bottom surface (68c); and wherein the first side wall and the second side wall are at obtuse angles with respect to the bottom surface.

12. The valve assembly of any one of claims 1-11, wherein increasing longitudinal fluid pressure on the at least one sealing assembly increases flow resistance in the at least one sealing assembly.

13. The valve assembly of any one of claims 1-12, further comprising a closed-end hollow frangible plug (16) consisting of non-polymeric materials and disposed in the at least one port and shearable from a closed position, in which the plug maintains a fluid seal in the at least one port, to an open position, in which fluid can flow through the at least one port.

14. The valve assembly of any one of claims 1-13, further comprising:
a second sleeve (30) disposed in the first sleeve and longitudinally slidable with respect to the first sleeve between an open position, wherein the second sleeve does not substantially restrict fluid flow through the at least one port, and a closed position, wherein the second sleeve restricts fluid flow through the at least one port; and
a coupling member (40) comprising an annular member having an inner surface that engages with an outer surface of the first sleeve and the second sleeve to couple the first and second sleeves together in the first position, and releases the second sleeve from the first sleeve in the second position;
wherein the first sleeve further comprises at least one opening (22) in its wall, and the first sleeve is longitudinally slidable with respect to the tubular housing between a first position, wherein fluid flow between the at least one opening and the at least one port is restricted, and a second position, wherein there is a substantially open flow path between the at least one opening and the at least one port;
wherein the inner surface of the annular member comprises radial grooves that engage with corresponding radial grooves in the outer surface of the first sleeve and/or the second sleeve to couple the first and second sleeves together;
wherein the coupling member expands into a coupling recess in the tubular housing when the first and second sleeve move from the first position to the second position to release the second sleeve from the first sleeve.

15. The valve assembly of any one of claims 1-14, further comprising a flow restriction member (90) in the fluid passageway to restrict flow through the ports by increasing the length and tortuosity of the fluid flow path when the first sleeve is in the second position,
wherein the flow restriction member comprises a sleeve having a plurality of slits (98) in its wall through which the flow path goes, and
a tortuous groove (96) in its outer wall through which the flow path goes.

## Patentansprüche

1. Ventilanordnung (10) für den Bohrlocheinsatz in einer Hochtemperaturbohrung, umfassend:
ein rohrförmiges Gehäuse (12), aufweisend:
eine Gehäusewand, die eine Innenoberfläche (12b) und eine Außenoberfläche (12a) aufweist;
einen Fluiddurchgang (50), der innerhalb des rohrförmigen Gehäuses definiert ist; und
mindestens einen Anschluss (14) in der Gehäusewand, um eine Fluidverbindung zwischen dem Fluiddurchgang und der Außenseite des rohrförmigen Gehäuses zu ermöglichen;
eine erste Hülse (20), die in dem rohrförmigen Gehäuse angeordnet und in Bezug auf das rohrförmige Gehäuse in Längsrichtung verschiebbar ist; und
mindestens eine Dichtungsanordnung (60) zum Begrenzen eines Fluidstroms zwischen dem Fluiddurchgang und dem mindestens einen Anschluss (14), umfassend:
mindestens ein ringförmiges Element (62,64,66) in einer radialen Nut (68), das einen gewundenen Strömungsweg (70) durch das mindestens eine ringförmige Element (62,64,66) von einer ersten Seite (62b,64b,66b) der radialen Nut (68) zu einer zweiten Seite (62c,64c,66c) der radialen Nut (68) erzeugt, um einen Fluidstrom durch die mindestens eine Dichtungsanordnung (60) einzuschränken.

2. Ventilanordnung nach Anspruch 1, wobei die Ventilanordnung (10) Temperaturen von mindestens 300 °C, vorzugsweise mindestens 400 °C, mehr bevorzugt mindestens 500 °C und mehr bevorzugt mindestens 600 °C standhalten kann.

3. Ventilanordnung nach Anspruch 1 oder 2, wobei die mindestens eine Dichtungsanordnung (60) aus nicht-polymerem Material besteht und vorzugsweise aus Metall besteht.

4. Ventilanordnung nach einem der Ansprüche 1 bis 3, wobei das Hochtemperaturbohrloch ein Geothermiebohrloch ist.

5. Ventilanordnung nach einem der Ansprüche 1 bis 4, wobei das mindestens eine ringförmige Element eine Vielzahl von Ringen (62,64,66) umfasst.

6. Ventilanordnung nach einem der Ansprüche 1 bis 5, wobei das mindestens eine ringförmige Element ein gewendeltes Element (64) mit einer Vielzahl von Ringen umfasst.

7. Ventilanordnung nach Anspruch 5 oder 6, wobei die Ringe nebeneinander in der radialen Nut angeordnet sind und jeder Ring einen Körper mit einer ersten Seitenfläche (62b,64b,66b) und einer zweiten Seitenfläche (62c,64c,66c) aufweist.

8. Ventilanordnung nach Anspruch 7, wobei mindestens einer der Ringe einen Spalt (62d,64d,66d) in seinem Körper aufweist, um einen Fluidstrom durch den Körper zwischen der ersten und der zweiten Seitenfläche zu ermöglichen, und der Spalt vorzugsweise einen Schlitz durch den Körper des Rings in einem Winkel in Bezug auf die radiale Achse des Rings umfasst.

9. Ventilanordnung nach Anspruch 8, wobei mehrere Ringe Spalte durch ihre Körper umfassen und die Spalte benachbarter Ringe nicht aneinander ausgerichtet sind.

10. Ventilanordnung nach einem der Ansprüche 5 bis 9, wobei ein Zwischenringspalt (74a) zwischen benachbarten Ringen vorhanden ist, um einen Fluidstrom zwischen benachbarten Ringen zu ermöglichen.

11. Ventilanordnung nach einem der Ansprüche 1 bis 10, wobei die radiale Nut durch eine erste Seitenwand (68a), eine zweite Seitenwand (68b), eine obere Oberfläche (68d) und eine untere Oberfläche (68c) definiert ist; und wobei die erste Seitenwand und die zweite Seitenwand in stumpfen Winkeln in Bezug auf die Bodenoberfläche stehen.

12. Ventilanordnung nach einem der Ansprüche 1 bis 11, wobei ein zunehmender longitudinaler Fluiddruck auf die mindestens eine Dichtungsanordnung den Strömungswiderstand in der mindestens einen Dichtungsanordnung erhöht.

13. Ventilanordnung nach einem der Ansprüche 1 bis 12, ferner umfassend einen hohlen zerbrechlichen Stopfen (16) mit geschlossenem Ende, zusammengesetzt aus nicht-polymeren Materialien, der in dem mindestens einen Anschluss angeordnet ist und von einer geschlossenen Position, in der der Stopfen eine Fluiddichtung in dem mindestens einen Anschluss aufrechterhält, in eine offene Position, in der Fluid durch den mindestens einen Anschluss strömen kann, abscherbar ist.

14. Ventilanordnung nach einem der Ansprüche 1 bis 13, ferner umfassend:
eine zweite Hülse (30), die in der ersten Hülse angeordnet und in Bezug auf die erste Hülse in Längsrichtung verschiebbar ist zwischen einer offenen Stellung, wobei die zweite Hülse den Fluidstrom durch den mindestens einen Anschluss im Wesentlichen nicht einschränkt, und einer geschlossenen Stellung, wobei die zweite Hülse den Fluidstrom durch den mindestens einen Anschluss einschränkt; und
ein Kopplungselement (40), das ein ringförmiges Element umfasst, das eine innere Oberfläche aufweist, die mit einer Außenoberfläche der ersten Hülse und der zweiten Hülse in Eingriff steht, um die erste und die zweite Hülse in der ersten Position miteinander zu koppeln, und die zweite Hülse in der zweiten Position von der ersten Hülse löst;
wobei die erste Hülse ferner mindestens eine Öffnung (22) in ihrer Wand umfasst, und die erste Hülse gegenüber dem rohrförmigen Gehäuse in Längsrichtung verschiebbar ist zwischen einer ersten Position, wobei ein Fluidstrom zwischen der mindestens einen Öffnung und dem mindestens einen Anschluss eingeschränkt ist, und einer zweiten Position, wobei ein im Wesentlichen offener Strömungsweg zwischen der mindestens einen Öffnung und dem mindestens einen Anschluss besteht;
wobei die innere Oberfläche des ringförmigen Elements radiale Nuten umfasst, die in entsprechende radiale Nuten in der Außenoberfläche der ersten Hülse und/oder der zweiten Hülse eingreifen, um die erste und die zweite Hülse miteinander zu koppeln;
wobei sich das Kopplungselement in eine Kopplungsausnehmung in dem rohrförmigen Gehäuse ausdehnt, wenn sich die erste und die zweite Hülse von der ersten Position in die zweite Position bewegen, um die zweite Hülse von der ersten Hülse zu lösen.

15. Ventilanordnung nach einem der Ansprüche 1 bis 14, ferner umfassend ein Strömungsbegrenzungselement (90) in dem Fluiddurchgang, um die Strömung durch die Anschlüsse durch Erhöhen der Länge und Gewundenheit des Fluidströmungswegs zu begrenzen, wenn sich die erste Hülse in der zweiten Position befindet,
wobei das Strömungsbegrenzungselement eine Hülse mit einer Vielzahl von Schlitzen (98) in ihrer Wand umfasst, durch die der Strömungsweg verläuft, und
eine gewundene Nut (96) in ihrer Außenwand, durch die der Strömungsweg verläuft.

## Revendications

1. Ensemble vanne (10) pour une utilisation de fond de trou dans un puits à haute température comprenant :
un logement tubulaire (12) ayant :
une paroi de logement ayant une surface interne (12b) et une surface externe (12a) ;
une voie de passage de fluide (50) définie au sein du logement tubulaire ; et
au moins un orifice (14) dans la paroi de logement, destiné à permettre une communication fluidique entre la voie de passage de fluide et l'extérieur du logement tubulaire ;
un premier manchon (20) disposé dans le logement tubulaire et pouvant coulisser longitudinalement par rapport au logement tubulaire ; et
au moins un ensemble d'étanchéité (60) destiné à limiter un écoulement de fluide entre la voie de passage de fluide et l'au moins un orifice (14), comprenant :
au moins un élément en forme d'anneau (62, 64, 66) dans une rainure radiale (68) qui crée un chemin d'écoulement tortueux (70) à travers l'au moins un élément en forme d'anneau (62, 64, 66) à partir d'un premier côté (62b, 64b, 66b) de la rainure radiale (68) jusqu'à un second côté (62c, 64c, 66c) de la rainure radiale (68) pour limiter un écoulement de fluide à travers l'au moins un ensemble d'étanchéité (60).

2. Ensemble vanne selon la revendication 1, dans lequel l'ensemble vanne (10) peut supporter des températures d'au moins 300 °C, de préférence au moins 400 °C, plus préférablement au moins 500 °C, et plus préférablement au moins 600 °C.

3. Ensemble vanne selon la revendication 1 ou 2, dans lequel l'au moins un ensemble d'étanchéité (60) est constitué d'un matériau non polymère, et de préférence est constitué de métal.

4. Ensemble vanne selon l'une quelconque des revendications 1 à 3, dans lequel le puits à haute température est un puits géothermique.

5. Ensemble vanne selon l'une quelconque des revendications 1 à 4, dans lequel l'au moins un élément en forme d'anneau comprend une pluralité d'anneaux (62, 64, 66).

6. Ensemble vanne selon l'une quelconque des revendications 1 à 5, dans lequel l'au moins un élément en forme d'anneau comprend un élément enroulé (64) ayant une pluralité d'anneaux.

7. Ensemble vanne selon la revendication 5 ou 6, dans lequel les anneaux sont agencés côte à côte dans la rainure radiale, et chaque anneau a un corps avec une première face latérale (62b, 64b, 66b) et une seconde face latérale (62c, 64c, 66c).

8. Ensemble vanne selon la revendication 7, dans lequel au moins l'un des anneaux a un espace (62d, 64d, 66d) dans son corps destiné à permettre un écoulement de fluide à travers le corps entre les première et seconde faces latérales, et l'espace comprend de préférence une fente à travers le corps de l'anneau selon un angle par rapport à l'axe radial de l'anneau.

9. Ensemble vanne selon la revendication 8, dans lequel de multiples anneaux comprennent des espaces à travers leurs corps, et les espaces d'anneaux adjacents ne sont pas alignés.

10. Ensemble vanne selon l'une quelconque des revendications 5 à 9, dans lequel il y a un espace entre anneaux (74a) entre des anneaux adjacents, destiné à permettre un écoulement de fluide entre des anneaux adjacents.

11. Ensemble vanne selon l'une quelconque des revendications 1 à 10, dans lequel la rainure radiale est définie par une première paroi latérale (68a), une seconde paroi latérale (68b), une surface supérieure (68d) et une surface inférieure (68c) ; et dans lequel la première paroi latérale et la seconde paroi latérale sont à des angles obtus par rapport à la surface inférieure.

12. Ensemble vanne selon l'une quelconque des revendications 1 à 11, dans lequel une pression de fluide longitudinale croissante sur l'au moins un ensemble d'étanchéité augmente la résistance à l'écoulement dans l'au moins un ensemble d'étanchéité.

13. Ensemble vanne selon l'une quelconque des revendications 1 à 12, comprenant en outre un bouchon frangible creux à extrémité fermée (16) constitué de matériaux non polymères et disposé dans l'au moins un orifice et pouvant être cisaillé d'une position fermée, dans laquelle le bouchon maintient un joint d'étanchéité aux fluides dans l'au moins un orifice, à une position ouverte, dans laquelle un fluide peut s'écouler à travers l'au moins un orifice.

14. Ensemble vanne selon l'une quelconque des revendications 1 à 13, comprenant en outre :
un second manchon (30) disposé dans le premier manchon et pouvant coulisser longitudinalement par rapport au premier manchon entre une position ouverte, dans laquelle le second manchon ne limite pas sensiblement un écoulement de fluide à travers l'au moins un orifice, et une position fermée, dans laquelle le second manchon limite un écoulement de fluide à travers l'au moins un orifice ; et
un élément d'accouplement (40) comprenant un élément annulaire ayant une surface interne qui vient en prise avec une surface externe du premier manchon et du second manchon pour accoupler les premier et second manchons ensemble dans la première position, et libère le second manchon du premier manchon dans la seconde position ;
dans lequel le premier manchon comprend en outre au moins une ouverture (22) dans sa paroi, et le premier manchon peut coulisser longitudinalement par rapport au logement tubulaire entre une première position, dans laquelle un écoulement de fluide entre l'au moins une ouverture et l'au moins un orifice est limité, et une seconde position, dans laquelle il y a un chemin d'écoulement sensiblement ouvert entre l'au moins une ouverture et l'au moins un orifice ;
dans lequel la surface interne de l'élément annulaire comprend des rainures radiales qui viennent en prise avec des rainures radiales correspondantes dans la surface externe du premier manchon et/ou du second manchon pour accoupler les premier et second manchons ensemble ;
dans lequel l'élément d'accouplement s'expanse dans un évidement d'accouplement dans le logement tubulaire lorsque les premier et second manchons se déplacent de la première position à la seconde position pour libérer le second manchon du premier manchon.

15. Ensemble vanne selon l'une quelconque des revendications 1 à 14, comprenant en outre un élément de limitation d'écoulement (90) dans la voie de passage de fluide pour limiter un écoulement à travers les orifices en augmentant la longueur et la tortuosité du chemin d'écoulement de fluide lorsque le premier manchon est dans la seconde position,
dans lequel l'élément de limitation d'écoulement comprend un manchon ayant une pluralité de fentes (98) dans sa paroi à travers lesquelles passe le chemin d'écoulement, et
une rainure tortueuse (96) dans sa paroi externe à travers laquelle passe le chemin d'écoulement.
